# EUROPEAN PATENT APPLICATION

(11) **EP 2 073 596 A1**
(43) Date of publication of application: **24.06.2009**
(21) Application number: 07255020.5
(22) Date of filing: 21.12.2007
(51) Int. Cl.: H04W 88/02

(54) **Managing demand on a battery of a mobile communications device**

(71) Applicant: TTPCOM Limited, Royston, Hertfordshire, SG8 6HQ (GB)
(72) Inventor: Herczog, Pascal, Cambridge Cambridgeshie CB1 9AZ (GB)
(74) Representative: Gillard, Matthew Paul

(57) **Abstract**

A method of managing demand on a battery (26) of a mobile communications device (10) served by a network which defines a requirement relating to the behaviour of the mobile communications device (10), the method comprising assessing the status of the battery (26) and adjusting the behaviour of the mobile communications device (10) according to the status of the battery (26), such that the behaviour of the mobile communications device (10) departs from the network-defined requirement.

## Description

The present invention relates to a method of managing demand on a battery of a mobile communications device, and to a mobile communications device which uses such a method.

The field of mobile communications is constantly evolving as new standards and protocols offering improved performance in terms of network efficiency, call quality, data rates and the like are developed and adopted. Mobile communications devices such as mobile telephones which support these new standards and protocols have been developed, and it is increasingly common for such devices to support more than one such standard, or to support more than one frequency band which may be used in a particular standard.

For example, the GSM system for mobile communications is widely used throughout the world. However, due to differing allocation of the radio spectrum, different frequency bands are used in different countries. To facilitate so-called "international roaming", mobile communications devices such as mobile telephones have been developed which are compatible with two or more of the different frequency bands used by this standard. Thus, a dual-band mobile telephone may be compatible with the GSM systems prevalent in Europe, which use the 900MHz and 1800MHz frequency bands, whilst a tri-band mobile telephone may also support the 1900MHz GSM system used in some parts of the USA, and a quad-band mobile telephone may also be compatible with the 850MHz GSM system used in other parts of the USA.

As well as supporting different frequency bands used in the GSM standard, some mobile communications devices, known as multi-mode devices, are able to operate using entirely different communications standards. For example, devices are available which support both the GSM standard, which is a so-called "second generation" (2G) standard, and a "third generation" (3G) standard such as W-CDMA, and are able to switch between the two dynamically so as to obtain the best possible performance in the prevailing conditions.

Other devices are able to use and switch between a 2G or 3G cellular standard and other wireless communications standards such as 4G, CDMA and IEEE 802.11

In addition, the concept of technological convergence is increasingly influential in the development of mobile communications devices. In this context, the term convergence relates to the combining of features and capabilities in a single device. For example, a multi-mode mobile telephone may support two or more different frequency bands used by the GSM standard, as well as IEEE 802.11 and Bluetooth® wireless communications standards, and may also include a digital camera, media player software and a receiver for a positioning system, such as a GPS receiver.

It will be appreciated that multi-mode and multi-function devices incorporating features and capabilities such as those described above are likely to require more power than less sophisticated devices. However, users of such devices are likely to be accustomed to the battery life, in terms of the amount of standby time and talk time available from a fully-charged battery, of the less sophisticated devices, and to expect similar battery performance.

According to a first aspect of the present invention, there is provided a method of managing demand on a battery of a mobile communications device served by a network which places a requirement on the behaviour of the mobile communications device, the method comprising assessing the status of the battery and adjusting the behaviour of the mobile communications device according to the status of the battery, such that the behaviour of the mobile communications device departs from the network-defined requirement.

By managing the demand on the battery of the mobile communications device in this way, aspects of the behaviour of the mobile communications device which are not essential to "core" functions of the device (that are likely to be of most importance to a user and to a network operator, in terms of revenue generation, such as the ability to make or receive a call, for example) can be suppressed, such that these core functions can be made available to the user for a longer period of time before the battery is discharged.

Assessing the status of the battery may comprise assessing a level of charge of the battery.

Additionally or alternatively, assessing the status of the battery may comprise assessing a rate of discharge of the battery.

The method may further comprise altering the operation of an ancillary function of the mobile communications device, such as the operation of a positioning system receiver, according to the status of the battery.

The method may further comprise altering the operation of a user experience related function of the mobile communications device, such as post-processing of an audio signal, according to the status of the battery.

According to a second aspect of the invention, there is provided a mobile communications device comprising a battery and battery monitoring means for assessing the status of the battery, wherein the mobile communications device can be served by a network which places a requirement on the behaviour of the mobile communications device and the mobile communications device is configured to adjust said behaviour according to the status of the battery, such that said behaviour departs from the network-defined requirement.

The battery monitoring means may be configured to monitor a level of charge of the battery.

Additionally or alternatively, the battery monitoring means may be configured to monitor a rate of discharge of the battery.

The mobile communications device may be configured to alter the operation of an ancillary function of the mobile communications device according to the status of the battery.

For example, in a multi-function mobile telephone having a positioning system receiver, the positioning system receiver may be deactivated when the level of charge of the battery falls below a predetermined threshold.

The mobile communications device may be configured to alter the operation of a user experience related function of the mobile communications device according to the status of the battery.

According to a third aspect of the invention, there is provided a method of managing demand on a battery of a mobile communications device, the method comprising receiving, at a network serving the mobile communications device, an indication of the status of the battery of the mobile communications device and adjusting a requirement placed by the network on the behaviour of the mobile communications device according to the status of the battery so as to cause an adjustment to the behaviour of the mobile communications device.

According to a fourth aspect of the invention, there is provided an apparatus for a telecommunications network comprising receiving means for receiving an indication of the status of a battery of a mobile communications device and configuration means for configuring a requirement placed by the telecommunications network on the behaviour of the mobile communications device, wherein the configuration means is arranged to adjust said requirement according to the status of the battery of the mobile communications device so as to cause an adjustment to the behaviour of the mobile communications device.

According to a fifth aspect of the invention, there is provided a method of managing demand on a battery of a mobile communications device served by a network which places a requirement on the behaviour of the mobile communications device, the method comprising assessing the status of the battery and adjusting the behaviour of the mobile communications device according to the status of the battery so as to cause an adjustment to the network-placed requirement.

For example, the mobile communications device may alter a parameter that is transmitted to the network, which parameter is indicative of the capabilities of the mobile communications device, so as to cause an adjustment to the network-placed requirement.

Additionally or alternatively, the mobile communications device may alter the number of antennae used by the mobile communications device, so as to cause an adjustment to the network-placed requirement.

According to a sixth aspect of the invention, there is provided a mobile communications device comprising a battery and battery monitoring means for assessing the status of the battery, wherein the mobile communications device can be served by a network which places a requirement on the behaviour of the mobile communications device and the mobile communications device is configured to adjust said behaviour according to the status of the battery so as to cause an adjustment to the network-placed requirement.

The mobile communications device may be configured to alter a parameter that is transmitted to the network, which parameter is indicative of the capabilities of the mobile communications device, so as to cause an adjustment to the network-placed requirement.

The mobile communications device may be configured to alter the number of antennae used by the mobile communications device so as to cause an adjustment to the network-placed requirement.

According to a seventh aspect of the invention, there is provided a program for causing processing means to perform the method of the first, third or fifth aspect.

Embodiments of the invention will now be described in detail, strictly by way of example only, with reference to the accompanying drawings, of which:
Figure 1 is a schematic representation of a mobile telecommunications device;
Figure 2 is a flow chart illustrating operation of one method according to the invention; and
Figure 3 is a flow chart illustrating operation of an alternative method.

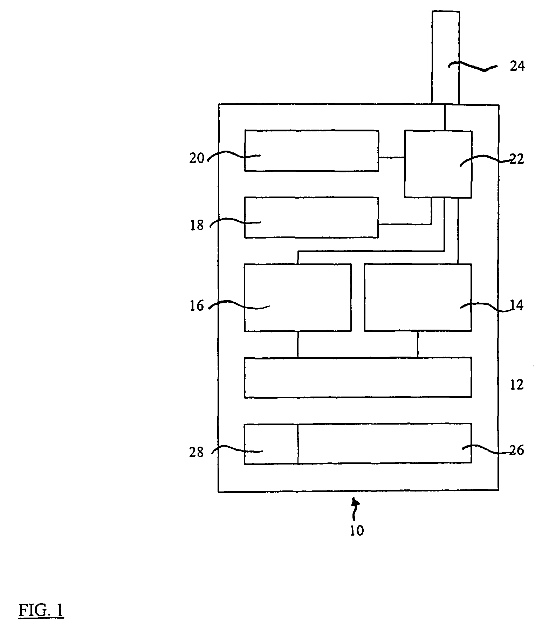

Referring firstly to Figure 1, a mobile communications device, in this example a multi-function, multi-mode mobile telephone, is shown generally at 10, although it will be appreciated that the method of the present invention is equally applicable to other mobile communications devices such as portable digital assistants (PDAs) and the like.

The mobile telephone 10 comprises a common sub-system 12 which handles functions such as digitising the speech of a user of the telephone 10, drawing and refreshing a display of the telephone 10 and the like.

The telephone 10 also includes a cellular communications subsystem 14, which handles the encoding, decoding and other functions required to provide compatibility of the telephone 10 with one or more cellular mobile communications systems, which may be, for example, a second generation (2G) system such as GSM, or a third generation (3G) system such as W-CDMA.

Additional subsystems may be provided to implement ancillary functions of the telephone 10. For example, a wireless communications subsystem 16 may be provided, enabling the telephone 10 to communicate with other devices using a wireless protocol such as IEEE 802.11. A separate Bluetooth® subsystem 18 may also be provided, to enable communication with compatible devices (although this functionality may be implemented by the wireless communications sub-system 16), and a positioning system receiver 20, such as a CTPS receiver, may also be provided. These individual subsystems 14, 16, 18, 20 may each have a dedicated antenna, or may be linked to one or more antennae 24 of the telephone 10 by means of a multiplexer 22.

A rechargeable battery 26 is provided to power the telephone 10, and is linked to a battery monitoring subsystem 28. The battery monitoring subsystem 28 monitors the status of the battery 26 and provides information relating to the status of the battery, such as an indication of the level of charge of the battery 26, or an indication of a rate of discharge of the battery 26, to the common subsystem 12, which uses the information to provide a visual indication of the status of the battery, in terms of the level of charge or remaining capacity of the battery 26 on a screen of the mobile telephone 10, and to influence the operation of the other subsystems of the telephone 10. Many methods of monitoring the status of the battery 26 will be known to those skilled in the art. In one example, the battery monitoring subsystem 28 may periodically measure a parameter of the battery 26, such as its internal impedance or current, to obtain an indication of the level of charge of the battery 26 and an indication of the rate of discharge of the battery 26.

The cellular communications subsystem 14 is responsible for establishing and maintaining a connection to a cellular communications network, including enacting the process of handoff (or handover) of an active call from one cell to another. In the exemplary case of a GSM cellular system, this involves monitoring a parameter of a signal received from the base station of a cell serving the mobile telephone 10, such as received signal strength or signal to noise ratio, and reporting this to a network serving the telephone 10, maintaining a list containing the identities of a plurality of neighbouring cells and enacting the transition of the call from one cell to the other once an instruction to hand-off has been received from the network.

The cellular communications subsystem 14 is also responsible for transmitting and receiving messages between the mobile telephone 10 and the cellular network to keep the cellular network informed of the location and status of the mobile telephone 10. This involves periodically transmitting a message to the network (such as a location update) and receiving system information.

It will be appreciated that these functions and processes of the cellular communications subsystem 14, which are essential to the operation of the mobile telephone 10 (at least for making and receiving calls), each require power from the battery 26. These power demands are increased in the case of a multi-band or multi-mode telephone which is compatible with more than one cellular communications standard or more than one frequency band used in a particular standard. For example, in the case of a quad-band, GSM/W-CDMA dual-mode mobile telephone, multiple (typically two, for a mobile telephone operating in Europe) GSM frequency bands must be searched and monitored for an appropriate cell, as well as the W-CDMA frequency band or bands for which the telephone 10 is configured. This monitoring must be carried out on a periodic basis, to allow handoff of a call not only from one cell to another, but also between a GSM network and a W-CDMA network, if appropriate.

Furthermore, the various ancillary subsystems 16, 18, 20 each make demands on the battery 26, and if all of these subsystems are operational simultaneously, the demand is greater than when only some of the subsystems are operational.

These demands on the battery 26 of the mobile telephone 10 must be carefully managed to maximise the battery life, in terms of the amount of standby time and "active" time (i.e. time spent using the telephone 10 for making voice or data calls, or using ancillary functions of the telephone 10) that is available before the battery 26 must be recharged.

The present invention enables these demands on the battery 26 to be managed, by adjusting the behaviour of the mobile telephone 10 such that less power is consumed in performing network related operations when the level of charge of the battery 26 is low. In this way, functions of the mobile telephone 10 which are essential for making and receiving calls remain available for longer when the level of charge of the battery 26 is low, whilst when the battery 26 is fully charged or almost fully charged, additional functions which are required by a network serving the mobile telephone 10, or which provide a richer user experience, for example by improving voice quality during a call, or the ancillary functions such as those provided by the positioning system receiver 20, are available.

Typically, a network serving a mobile telephone 10 places certain requirements on the behaviour of the mobile telephone 10, with which the mobile telephone 10 is expected to comply. For example, a search interval may be specified by the network (or by a standard governing the operation of the network), which stipulates how regularly the mobile telephone 10 must initiate a search for an alternative network with which it is compatible.

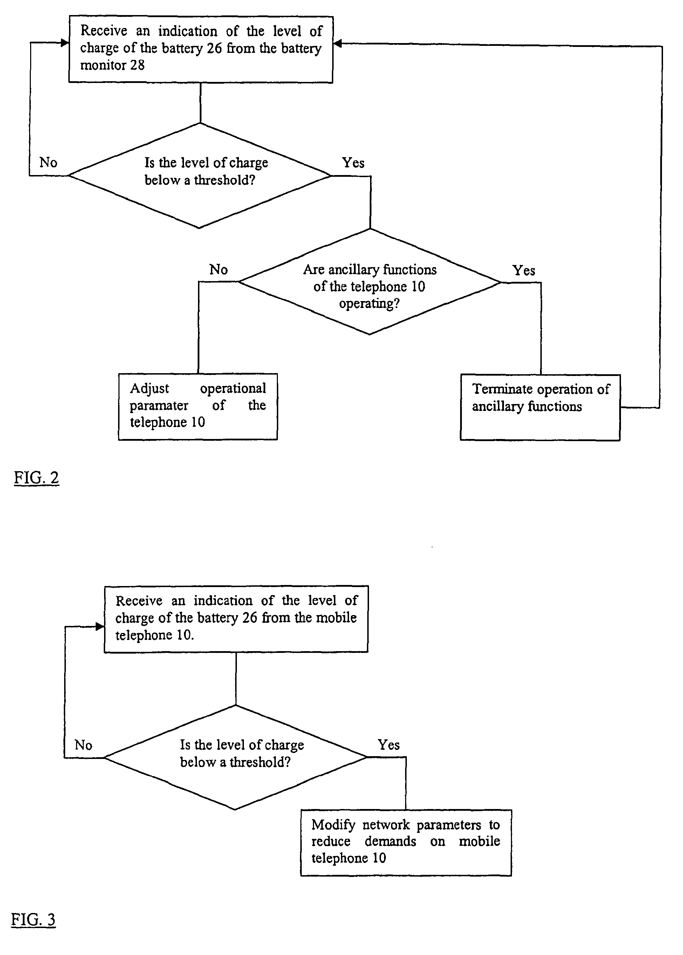

The flow chart of Figure 2 illustrates one exemplary embodiment of a method according to the present invention. In this embodiment, the mobile telephone 10 unilaterally or autonomously adjusts its behaviour according to the status of the battery 26, departing from the requirements of the network so as to manage the demand on the battery 26.

In the embodiment illustrated in Figure 2, the mobile telephone 10 (or other mobile communications device) assesses the status and condition of the battery 26 by periodically receiving from the battery monitoring subsystem 28 an indication of the level of charge of the battery 26. The battery monitoring subsystem 28 may also provide an indication of the rate of discharge of the battery 26. If a predetermined condition indicating that the remaining life of the battery has dropped to an unacceptable level is met, for example if the indicated level of charge is below a threshold, or if the indicated rate of discharge of the battery 26 is above a threshold, the mobile telephone 10 checks whether ancillary functions, such as the positioning system receiver 20 or the Bluetooth® subsystem 18 are operational. If so, these are deactivated to conserve battery power. The operation of other functions of the mobile telephone 10, which are not directly related to making and receiving calls, but which improve the experience of a user of the telephone 10 in making or receiving a call, may also be adjusted to reduce power consumption, thus increasing battery life. For example, the amount of audio post-processing performed by the telephone 10 for noise reduction and echo cancellation may be reduced. If, after deactivating the ancillary functions of the telephone 10 and adjusting these other, user experience related functions of the telephone 10, the remaining battery life remains at an unacceptable level, the common subsystem 12 of the telephone 10 proceeds to adjust aspects of the behaviour of the mobile telephone 10 which relate to the rules or requirements defined by the network serving the mobile telephone 10.

The telephone 10 is able to adjust many aspects of its behaviour to reduce its power consumption and thus increase the amount of time for which the telephone 10 can be used before the battery 26 must be recharged.

For example, timer periods defined within the telephone 10 which control the initiation of searches by the telephone 10 for an alternative network with which it is compatible, such as an IEEE 802.11 network, may be increased, causing the telephone 10 to search for such alternatives less frequently.

If the mobile telephone 10 has cause to perform an initial network search when the level of charge of the battery 26 is low, for example if the battery 26 is not fully charged when the mobile telephone 10 is switched on, the telephone 10 may adjust its behaviour in performing an initial network search. For example, the telephone 10 may exclude certain networks from the search, by searching only for those networks that are most likely to be available, based on knowledge of the geographical extent of coverage of particular networks, or on historical data, such as the amount of time for which the telephone 10 was connected to particular networks during a previous period of activity. Alternatively, the telephone 10 may initially search for the last network to which it was connected, on the assumption that this network is the most likely to be found, or may override user-defined rules governing the selection of a network, if the telephone 10 is being used in a roaming mode.

The mobile telephone 10 may connect, initially or subsequently, to a network which is not a preferred network, and in normal circumstances (i.e. when the behaviour of the telephone complies with the rules or requirements placed on it by its serving network), the telephone 10 periodically searches for a preferred network to which to connect. However, the telephone 10 may adjust this behaviour when the level of charge of the battery 26 is low. Thus, the telephone 10 may reduce the frequency with which it searches for a preferred network, or may suspend such searches until the level of charge of the battery 26 has increased.

If the mobile telephone 10 is connected to two or more networks simultaneously, it may terminate connections to non-preferred networks to conserve battery life when the level of charge of the battery 26 is low, with these non-preferred networks being excluded by the telephone 10 from further network searches until the level of charge of the battery 26 has increased.

It will be appreciated that unilaterally altering the behaviour of the mobile telephone 10 in this way may have an adverse effect on the performance of the network as a whole. Some alterations to the behaviour of the telephone 10 may have more of an effect than others, whilst making more than one alteration is likely to increase the adverse effect on the network. Thus, there may be a hierarchy or order in which the telephone 10 alters its behaviour. For example, the telephone 10 may increase the timer periods of its application layer timers, to reduce the regularity with which it searches for an alternative network, as a first alteration. If this alteration to the behaviour of the telephone 10 does not result in a satisfactory increase in the usable life of the battery 26, which may be determined, for example, by monitoring the level of charge or rate of discharge of the battery 26 after the alteration has been made, a further alteration, such as altering the class mark of the telephone 10, may be made. If this further alteration does not result in a satisfactory increase in the usable life of the battery 26, as determined by comparing the level of charge or rate of discharge of the battery 26 to one or more thresholds, for example, a still further alteration to the behaviour of the telephone 10 may be made.

It will be appreciated that the method described above with reference to Figure 2, in which a mobile communications device such as a mobile telephone 10 unilaterally or autonomously adjusts its own behaviour offers advantages in terms of managing demand on the battery 26 and thus extending the usable life of the battery 26. However, relatively few parameters of the behaviour of the mobile telephone 10 (i.e. those parameters for which the network serving the mobile telephone 10 defines rules or requirements) can be adjusted without reference to, or impact on, the serving network. Therefore, some of these adjustments may have to be made within boundaries as agreed with network operators. This situation may be advantageous to network operators, however, as it may permit them to offer improved, optimised or extended performance for devices operating on their networks which may not be available for the same devices operating on other networks.

The flow chart of Figure 3 illustrates an exemplary embodiment of another method of managing demand on a battery of a mobile communications device, such as the mobile telephone 10 shown in Figure 1. In this embodiment, the mobile telephone 10 provides an indication of the status of its battery 26 to its serving network, and the network adjusts the rules and requirements that it imposes on the mobile telephone 10, which results in an alteration to the behaviour of the mobile telephone 10, thus reducing the demand on the battery 26.

Thus, the battery monitoring subsystem 28 provides an indication of the status of the battery 26, which may be an indication of the level of charge of the battery 26, or an indication of the rate of discharge of the battery 26, to the common subsystem 12, and this indication is transmitted by the telephone 10 to its serving network. If the network determines that the remaining battery life is unacceptable, as determined, for example, by comparing the indicated level of charge or rate of discharge of the battery 26 to one or more thresholds, one or more parameters of the rules or requirements defined by the network are modified, to reduce the demands made by the network on the mobile telephone 10, and the mobile telephone 10 makes corresponding adjustments to its own behaviour.

The network may modify many aspects of its rules or requirements to reduce the demands made of the mobile telephone 10. For example, the network may force the mobile telephone 10 onto a longer paging interval. Doubling the paging interval of the mobile telephone 10 would result in a significant reduction in the amount of power used by the telephone 10 in paging activities, thus giving rise to a significant increase in standby time. Further significant reductions in power consumption can be achieved if the network reduces its measurement requirements, by adjusting thresholds and reducing the number of neighbouring cells for which the telephone 10 is required to make measurements. The network may also alter network-defined timer intervals which define how regularly the mobile telephone 10 searches for alternative networks or cells.

Additionally or alternatively, the network may adjust the parameters of transmitted signals, causing the mobile telephone 10 to make corresponding adjustments to its own behaviour, thus altering the power required to receive and process the signals. For example, the network may allocate more transmit power to signals destined for the mobile telephone 10, to reduce the amount of processing required by the mobile telephone to receive the signals, thereby reducing the power required to do so. The network may increase or decrease the coding strength of transmitted signals, according to propagation path conditions, to enable a reduction in the transmit power of the mobile telephone 10, or to reduce the likelihood that re-transmission will be required by the mobile telephone 10. Similarly, the network may force a switch from wideband audio coding to narrowband audio coding, and further may instruct the mobile telephone 10 to reduce audio codec rates to reduce the power required to transmit signals from the mobile telephone 10. For example, the audio codec bit-rates may be halved, thus halving the amount of data to be transmitted, leading to a reduction in the transmit power requirements of the mobile telephone 10. Similarly the modulation scheme used to transmit signals may be modified by the network to reduce radio receive time and optimise decoding by the mobile telephone 10. For example, a higher order modulation scheme may be used to improve data throughput, thus reducing the amount of time for which the mobile telephone 10 must actively receive data, giving rise to longer periods in which the mobile telephone 10 may partially power-down to conserve power. Additionally or alternatively, the network may force the mobile telephone 10 to use a more power efficient network standard for the services (e.g. voice and data calls) required.

Adjusting the rules or requirements imposed by the network and thus the behaviour of the telephone 10 in this way is likely to have an effect on the efficiency of the network as a whole, with this effect being more pronounced as the number of parameters adjusted increases. Thus, there may be a hierarchy or order in which parameters are adjusted, to minimise their effect on the efficiency of the network and disruption to other users of the network. In one example, the hierarchy or order in which parameters are adjusted may be determined by comparing the indicated level of charge and/or rate of discharge of the battery 26 to one or more thresholds, although it will be apparent to those skilled in the art that other methods, such as adaptive thresholding, neural network techniques and the like are equally suitable for determining which parameters to alter.

The two-way communication between the mobile telephone 10 and the network is a major advantage of the method described above, as it permits the network to manage the alterations to the behaviour of the mobile telephone 10, so as to minimise disruption and loss of performance of the network. Indeed, it may be possible for the network simply to use spare capacity to implement the method, thus avoiding any disruption or performance loss. Additionally, as many parameters of the network-defined rules or requirements can be adjusted to force corresponding adjustments to the behaviour of the mobile telephone 10, this network-driven method offers greater flexibility than the method in which the mobile telephone 10 unilaterally or autonomously adjusts its own behaviour.

In practice an indication of the status of the battery 26 is typically received by a base station or other network equipment of a cell of the network serving the mobile telephone 10, and the indication received from the mobile telephone 10 is transmitted to a base station controller, which instructs the base station to adjust one or more parameters of the network-defined rules or requirements according to the status of the battery 26, to force a corresponding adjustment to the behaviour of the mobile telephone 10.

In a further method which may be employed as an alternative to, or in addition to, the methods described above, the telephone 10 may unilaterally alter its behaviour according to the status of its battery 26, with this alteration in the behaviour of the telephone 10 causing an alteration in the behaviour of the network serving the telephone 10.

Typically, the mobile telephone 10 periodically transmits a parameter indicative of its capabilities, such as the maximum transmit power of the telephone 10 or the number of frequency bands supported by the telephone 10, to the network, and this transmitted parameter is used by the network to assist in determining parameters of signals transmitted to the telephone 10. In some telecommunications systems, this parameter is known as a "class mark", and this terminology will be used hereinafter for convenience, although it should be noted that the method described is not restricted to any particular telecommunications system.

By altering the class mark that it transmits to the network, the telephone 10 can force the network to alter its behaviour towards the telephone 10 to reduce the demands on the telephone 10, and thus reduce the power consumption of the telephone 10.

For example, when at the edge of a cell of the network, a telephone 10 having a first class mark may be required to continue to transmit signals with high transmit power, whereas a telephone 10 having a second class mark, indicating that it has a lower maximum transmit power, may be forced to handoff or reselect a neighbouring cell, resulting in a lower transmit power requirement.

Thus, by altering the class mark transmitted to the network by the telephone 10 according to the status of the battery, the network can be forced to alter its behaviour, for example by transmitting signals with higher power to the telephone 10, thus reducing the power burden on the telephone 10 in receiving the signals, and therefore reducing the power consumption of the mobile telephone 10.

In another example, if the level of charge of the battery 26 is low, the telephone 10 may transmit a class mark indicating that it supports fewer frequency bands than would normally be the case. The network may then require the telephone 10 only to search within these frequency bands, thus reducing the power consumed by the telephone 10 in performing such searches.

Similarly, the telephone 10 may unilaterally adjust the number of antennae 24 that are used in making or receiving a call according to the status of its battery 26. The network will detect a change in the quality of the radio link between the mobile telephone 10 and the network, and the network may respond by adjusting its transmit power to maintain the call. For example, if the mobile telephone 10 unilaterally changes its behaviour so as to use only one of two available antennae 24, the network detects a reduction in the quality of the radio link, and must respond by increasing its transmit power if the connection with the telephone 10 is to be maintained. In this way, the power required by the telephone 10 in receiving and processing signals is reduced, thus leading to an increase in the useable life of the battery 26.

The methods used in the embodiments described above are not restricted to multi-band or multi-mode mobile communications devices, but are equally applicable to less sophisticated mobile communications devices, such as single band, voice-only mobile telephones.

It will be appreciated that the methods of the present invention can be implemented in a variety of different ways. For example, the methods may be implemented as computer programs configured to cause a processor of the mobile telephone 10 to carry out the methods. Alternatively, the methods may be carried out in hardware, or using an application specific integrated circuit (ASIC) or a suitably programmed microprocessor.

## Claims

1. A method of managing demand on a battery (26) of a mobile communications device (10) served by a network which places a requirement on the behaviour of the mobile communications device (10), the method comprising assessing the status of the battery (26) and adjusting the behaviour of the mobile communications device (10) according to the status of the battery (26), such that the behaviour of the mobile communications device (10) departs from the network-defined requirement.

2. A method according to claim 1 wherein assessing the status of the battery (26) comprises assessing a level of charge of the battery (26).

3. A method according to claim 1 or claim 2 wherein assessing the status of the battery (26) comprises assessing a rate of discharge of the battery (26).

4. A method according to any one of the preceding claims further comprising altering the operation of an ancillary function of the mobile communications device (10) according to the status of the battery (26).

5. A method according to any one of the preceding claims further comprising altering the operation of a user experience related function of the mobile communications device (10) according to the status of the battery (10).

6. A mobile communications device (10) comprising a battery (26) and battery monitoring means (28) for assessing the status of the battery (26), wherein the mobile communications device (10) can be served by a network which places a requirement on the behaviour of the mobile communications device (10) and the mobile communications device (10) is configured to adjust said behaviour according to the status of the battery (26), such that said behaviour departs from the network-defined requirement.

7. A mobile communications device (10) according to claim 6 wherein the battery monitoring means is configured to monitor a level of charge of the battery (26).

8. A mobile communications device (10) according to claim 6 or claim 7 wherein the battery monitoring means is configured to monitor a rate of discharge of the battery (26).

9. A mobile communications device (10) according to any one of claims 6 to 8 wherein the mobile communications device (10) is configured to alter the operation of an ancillary function of the mobile communications device (10) according to the status of the battery (26).

10. A mobile communications device (10) according to any one of claims 6 to 9 wherein the mobile communications device (10) is configured to alter the operation of a user experience related function of the mobile communications device (10) according to the status of the battery (26).

11. A method of managing demand on a battery (26) of a mobile communications device (10), the method comprising receiving, at a network serving the mobile communications device (10), an indication of the status of the battery (26) of the mobile communications device (10) and adjusting a requirement placed by the network on the behaviour of the mobile communications device (10) according to the status of the battery (26) so as to cause an adjustment to the behaviour of the mobile communications device (10).

12. Apparatus for a telecommunications network comprising receiving means for receiving an indication of the status of a battery (26) of a mobile communications device (10) and configuration means for configuring a requirement placed by the telecommunications network on the behaviour of the mobile communications device (10), wherein the configuration means is arranged to adjust said requirement according to the status of the battery (26) of the mobile communications device (10) so as to cause an adjustment to the behaviour of the mobile communications device (10).

13. A method of managing demand on a battery (26) of a mobile communications device (10) served by a network which places a requirement on the behaviour of the mobile communications device (10), the method comprising assessing the status of the battery (26) and adjusting the behaviour of the mobile communications device (10) according to the status of the battery (26) so as to cause an adjustment to the network-placed requirement.

14. A method according to claim 13 wherein the mobile communications device (10) alters a parameter that is transmitted to the network, which parameter is indicative of the capabilities of the mobile communications device (10), so as to cause an adjustment to the network-placed requirement.

15. A method according to claim 13 or claim 14 wherein the mobile communications device (10) alters the number of antennae used by the mobile communications device (10), so as to cause an adjustment to the network-placed requirement.

16. A mobile communications device (10) comprising a battery (26) and battery monitoring means (28) for assessing the status of the battery (26), wherein the mobile communications device (10) can be served by a network which places a requirement on the behaviour of the mobile communications device (10) and the mobile communications device (10) is configured to adjust said behaviour according to the status of the battery (26) so as to cause an adjustment to the network-placed requirement.

17. A mobile communications device (10) according to claim 16 wherein the mobile communications device (10) is configured to alter a parameter that is transmitted to the network, which parameter is indicative of the capabilities of the mobile communications device (10), so as to cause an adjustment to the network-placed requirement.

18. A mobile communications device (10) according to claim 16 or claim 17, wherein the mobile communications device is configured to alter the number of antennae used by the mobile communications device (10) so as to cause an adjustment to the network-placed requirement.

19. A program for causing processing means to perform the method of any one of claims 1 to 5, 11 or 13-15.
